# EUROPEAN PATENT SPECIFICATION

(11) **EP 2 686 395 B1**
(45) Date of publication and mention of the grant of the patent: **11.10.2017**
(21) Application number: 11853451.0
(22) Date of filing: 27.12.2011
(51) Int. Cl.: C09J 123/00, C09J 123/08, C09J 7/00

(54) **HOT MELT ADHESIVE**
SCHMELZKLEBER
ADHÉSIF THERMOFUSIBLE

(30) Priority: 27.12.2010 JP 2010290636
(43) Date of publication of application: 22.01.2014
(73) Proprietor: Henkel IP & Holding GmbH, 40589 Düsseldorf (DE)
(72) Inventor: TAKAMORI, Ai, Osaka (JP)
(74) Representative: Viering, Jentschura & Partner mbB Patent- und Rechtsanwälte
(86) International application number: PCT/US2011/067324
(87) International publication number: WO 2012/092233

(56) References cited:
- EP-A2- 0 449 249
- US-A1- 2004 020 589
- US-A1- 2009 110 925
- US-A1- 2010 035 057
- US-B2- 7 166 662

## Description

The present invention relates to specific hot melt adhesives as defined in the claims. Furthermore, the present invention relates to a paper product produced by using the present hot melt adhesive.

The hot melt adhesive is a solventless adhesive. It is applied to an adherend by being heated and melted, and expresses adhesion after being cooled and solidified. For this reason, it is characterized by instant adhesion and high-speed adhesion, and it is used in a wide range of fields such as paper processing, woodwork, hygiene products and in the electronics field.

As a base polymer for the aforementioned hot melt adhesive, the following is widely used depending on its applications; ethylene-based copolymer such as ethylene - vinyl acetate copolymer (hereafter, referred also as "EVA") and ethylene - ethyl acrylate copolymer (hereafter, referred also as "EEA"), olefin-based resin such as polyethylene, polypropylene, and amorphous poly alpha olefin (hereafter, referred also as "APAO"), styrene-based block copolymer (for example, styrene - isoprenoid - styrene-based block copolymer, hereafter, referred also as "SIS"), styrene - butadiene - styrene-based block copolymer (hereafter, referred also as "SBS"), and synthesized rubber such as their hydrogen additives and polyurethane, etc.

Among these hot melt adhesives, hot melt adhesives whose base polymer is ethylene-based copolymer is often used in the paper processing field such as bookbinding and packing, and in the woodwork field.

JP 11-61067 refers to hot melt adhesives whose base polymer is EVA resin. The hot melt adhesive disclosed in JP 11-61067 has improved the cobwebbing performance (i.e., cobwebbing property is reduced) and therefore is suitable for the packing field.

JP 2008-527067 discloses a hot melt adhesive whose base polymer is α-olefin copolymer of ethylene/C3-C20 used for packing; bookbinding and woodwork. As well as the hot melt adhesive in JP 11-61067, the hot melt adhesive in JP 2008-527067 has improved the cobwebbing performance).

However, the hot melt adhesives in JP 11-61067 and JP 2008-527067 need to be applied to the base material at a high temperature (approximately 180 °C) in order to reduce their cobwebbing property therefore, they are not suitable as an adhesive to be applied at a low temperature (approximately 120-140 °C) (see [0042] in JP 11-61067 and [0037] in JP 2008-527067). Applying hot melt adhesive to a base material at a high temperature is not desirable because there might be adverse effects on the application line depending on the types of base material or composition of adhesives. Therefore, development of hot melt adhesives that can be applied at a low temperature of approximately 120-140 °C has been advancing.

JP 2010-518235 discloses an ethylene-based hot melt adhesive that can be applied at a low temperature (see [0061] in JP 2010-518235). However, hot melt adhesives that can be applied at a low temperature are generally low in heat resistance. There is a need in the art for hot melt adhesives that can be applied at a low temperature and is high in heat resistance.

JP 2010-518235 discloses the use of a specific polymer (specifically, functionalized metallocene polymer) as the base polymer in order to improve the heat resistance of the hot melt adhesive (see Claim 1 and Table 1). However, the hot melt adhesive in JP 2010-518235 does not fully satisfy extremely high heat resistance required by users.

Furthermore, considering the application to a wet base material or a base material of complex configuration, an open time of an appropriate length is required. If the open time of a hot melt adhesive is too short, it would be difficult to attach an adherend to a base material.

As illustrated above, hot melt adhesives are expected to be able to be applied at a low temperature, high in heat resistance, and show an appropriate length of open time so that it is suitable for application.

The present invention was made to achieve the aforementioned objectives. The objectives of the present invention is to provide a hot melt adhesive which is applicable at a low temperature, is excellent in heat resistance and shows a suitable long open time. Another objective of the present invention is to provide a paper product produced by using such a hot melt adhesive.

It has been discovered that combining a specific wax in an ethylene-based copolymer can solve the above problems.

Specifically, the present invention provides in summary a hot melt adhesive comprising (A) an ethylene-based copolymer and (B) a wax, wherein (B) the wax comprises (B1) a carboxylic acid or carboxylic acid anhydride-modified olefin copolymer wax, wherein (A) comprises an ethylene-olefin copolymer which is a copolymer of ethylene and octene.

In one mode of the present invention, the aforementioned hot melt adhesive wherein (B1) a carboxylic acid or carboxylic acid anhydride-modified olefin copolymer wax is a maleic anhydride-modified olefin copolymer wax, is provided.

It is desirable that the aforementioned maleic anhydride-modified olefin copolymer wax is a wax obtainable through copolymerization of maleic anhydride, ethylene and propylene.

In a desirable mode of the present invention, the aforementioned hot melt adhesive wherein (B) wax further comprises (B2) Fischer-Tropsch wax, is provided.

It is desirable that the melt viscosity at 130 °C of the aforementioned hot melt adhesive related to the present invention is 500-1100 mPa/s.

Moreover, the present invention provides a paper product produced by using the aforementioned hot melt adhesive.

The hot melt adhesive related to the present invention is a hot melt adhesive that contains (A) an ethylene-based copolymer, which comprises an ethylene-olefin copolymer which is a copolymer of ethylene and octene, and (B) a wax, and it is applicable at a low temperature of approximately 120-140 °C, is excellent in heat resistance and shows a suitable long open time because (B) the wax comprises (B1) a carboxylic acid or carboxylic acid anhydride-modified olefin copolymer wax.

The hot melt adhesive related to the present invention is more excellent in applicability at a low temperature when (B1) a carboxylic acid or carboxylic acid anhydride-modified olefin copolymer wax is a maleic acid anhydride-modified olefin copolymer wax.

The hot melt adhesive related to the present invention is particularly excellent in applicability at a low temperature, maintains excellent heat resistance and shows a more appropriate length of open time when the maleic acid anhydride-modified olefin copolymer wax is a wax obtainable through copolymerization of maleic anhydride, ethylene and propylene.

The hot melt adhesive related to the present invention is excellent in a balance of applicability at a low temperature, heat resistance and open time when (A) an ethylene-based copolymer comprises (A1) copolymer of ethylene and olefin.

The hot melt adhesive related to the present invention is more excellent in a balance of applicability at a low temperature, heat resistance and open time when (A1) copolymer of ethylene and olefin is a copolymer of ethylene and octene.

The hot melt adhesive related to the present invention is particularly excellent in heat resistance when (B) wax further comprises (B2) Fischer-Tropsch wax.

The hot melt adhesive related to the present invention is more excellent in applicability at a low temperature when the melt viscosity at 130 °C is 500-1100 mPa/s.

Because paper products related to the present invention are manufactured by using the aforementioned hot melt adhesive, they are manufactured in a low-temperature application line. Therefore, the application line of a hot melt adhesive or papers, which are the base materials, are not subject to adverse effects. Moreover, because the length of the open time of the hot melt adhesive is appropriate, there will be enough time for the manufacturing process of sticking paper products together.

In the present specifications, the "open time" refers to the time from when the hot melt adhesive is applied to an adherend to when fluidity of the adhesive disappears so the surface of the adherend cannot be wetted.

The hot melt adhesive related to the present invention comprises (A) an ethylene-based copolymer, which comprises an ethylene-olefin copolymer which is a copolymer of ethylene and octene, and (B) a wax, wherein (B) the wax comprises (B1) a carboxylic acid or carboxylic acid anhydride-modified olefin copolymer wax.

In the present specifications, the "hot melt adhesive" is an adhesive, which is solid at room temperature but can have fluidity by being heated and melted, can be applied to subjects such as a base material and adherend, etc. and hardens and adheres by being cooled.

In the present specifications, the "(A) an ethylene-based copolymer" comprises a copolymer of ethylene and octene, whereby the weight-average molecular weight of which is 15000 and over.

In the present invention, (A) an ethylene-based copolymer, which comprises an ethylene-olefin copolymer which is a copolymer of ethylene and octene, and (B) a wax are distinguished based on the weight-average molecular weight. The weight-average molecular weight refers to a value measured using gel permeation chromatograph (GPC) with polystyrene as the standard. Specifically, the value can be measured using the following GPC device and measurement method. For the GPC device, HCL-8220GPC manufactured by Tosoh Corporation is used and RI is used as a detector. For the GPC column, 2 of TSKgel SuperMultipore HZ-M manufactured by Tosoh Corporation are used. Samples are melted in tetrahydrofuran, flown at a current speed of 0.35 ml/min and with the column temperature at 40 °C, the molecular weight is converted using the calibration curve, which employs polystyrene of singly-dispersed molecular weight as the standard substance, to calculate the weight-average molecular weight.

"Other polymerizable monomer" refers to a monomer containing a double bond between carbon atoms, which can additionally polymerize with ethylene.

"Other polymerizable monomer" refers specifically to, for example, "olefin-based carbon hydride excluding ethylene," "carboxylic acid containing ethylene-based double bond," "carboxylic acid anhydride containing ethylene-based double bond," and "carboxylic acid ester containing ethylene-based double bond".

The following can be illustrated as examples of "olefin-based carbon hydride excluding ethylene" to be specific; propyrene, 1-buten, 1-penten, 1-hexene, 1-hepten, 1-octene, 1-nonen, 1-desen, cis-2-buten, trans-2-buten, isobutylene, cis-2-penten, trans-2-penten, 3-methyl-1-buten, 2-methyl-2-buten and 2,3-dimethyl-2-buten, etc.

"Carboxylic acid containing ethylene-based double bond" is a compound containing ethylene-based double bond and carboxyl base and is not particularly limited as long as the hot melt adhesive of the present invention can be obtained. Specifically, the following can be illustrated as examples; oleic acid, linoleic acid, maleic acid, itaconic acid, succinic acid, acrylic acid and methacrylic acid.

"Carboxylic acid anhydride containing ethylene-based double bond" refers to a compound containing carboxylic anhydride base in which 2 carboxyl bases are dehydrated and condensed and is not particularly limited as long as the hot melt adhesive of the present invention can be obtained. Specifically, maleic acid anhydride can be illustrated as an example.

The following can be illustrated as "carboxylic acid ether containing ethylene-based double bond" for example; (metha) acrylic acid ethyl such as (metha) methyl acrylate, (metha) acrylic acid butyl and (metha) acrylic acid 2-ethyl hexyl, carboxylic vinyl such as vinyl acetate, allyl acetate and allyl esther, etc.

These "other polymerized monomers" can be used on their own or by combining them.

In the present specifications, ethylene-based copolymers are disclosed which contain "(A1) copolymer of ethylene and olefin" in the case that the other polymerized monomer is "olefin-based carbon hydrate excluding ethylene", "(A2) copolymer of ethylene and carboxylic acid" in the case that the other polymerized monomer is "carboxylic acid containing ethylene-based double bond", "(A3) copolymer of ethylene and carboxylic acid" in the case that the other polymerized monomer is "carboxylic acid anhydride containing ethylene-based double bond", and "(A4) copolymer of ethylene and carboxylic acid ester" in the case that the other polymerized monomer is "carboxylic acid ester containing ethylene-based double bond". Those polymers can be optionally contained in the hot melt adhesive of the present invention.

In the present invention, the (A) ethylene-based copolymer comprises a copolymer of ethylene and octene.

As (A1) copolymer of ethylene and olefin, copolymer of ethylene and octene, copolymer of ethylene, propylene and 1-buten, copolymer of ethylene and propylene, and copolymer of ethylene and butene, etc. are desirable, copolymer of ethylene and octane and copolymer of ethylene, propylene and 1-butene are more desirable, and copolymer of ethylene and octene is particularly desirable. These (A1) copolymers of ethylene and olefin can be used on their own or by combining them. Commercially available copolymers of ethylene and olefin can be used.

As "copolymer of ethylene, propylene and 1-butene", Evonik Industries' VESTLAST 730 (product name) and VESTLAST 708 (product name), etc. can be illustrated as examples.

As "copolymer of ethylene and octane", Dow Chemical's Affinity GA 1900 (product name), Affinity GA 1950 (product name), Affinity EG8185 (product name), Affinity EG 8200 (product name), Engage 8137 (product name), Engage 8180 (product name), and Engage 8400 (product name), etc. can be illustrated as examples.

As "copolymer of ethylene and propylene", Eastman Chemical Company's Eastoflex E1016PL-1, etc. can be illustrated as an example.

In the present invention, (A) ethylene-based copolymer may contain at least one of the aforementioned (A2)-(A4) selected other than (A1). Among (A2)-(A4), (A4) is more desirable. Commercially available (A2)-(A4) can be used on their own or by combining them.

As examples of (A2), Ethylene - acrylic acid copolymer, ethylene - methacrylic acid copolymer, and ethylene - hydroxystearic acid copolymer can be illustrated.

As an example of (A3), ethylene - maleic acid anhydride copolymer can be illustrated.

As examples of (A4), ethylene - vinyl acetate copolymer, ethylene - methyl methacrylate copolymer, ethylene - 2 ethyl hexyl acrylate copolymer, ethylene - butyl acrylate copolymer, and ethylene - butyl methacrylate can be illustrated. As (A4), ethylene - methyl methacrylate copolymer is more desirable and ethylene - vinyl acetate copolymer is particularly desirable.

It is desirable that the melt flow rate of (A) ethylene-based copolymer is 10-600 g/10 min and it is particularly desirable to be 10-500 g/10 min. With the melt flow rate of 10-600 g/10 min, a hot melt adhesive excellent in a balance of adhesive power, heat resistance and low-temperature applicability can be obtained.

In the present specifications, the "melt flow rate" refers to an index showing fluidity of resin, which is calculated by heating/adding pressure to a certain amount of synthesized resin at a specific temperature (190 °C) in a cylindrical container heated with a heater, and measuring the amount of resin pushed out per 10 minutes from an opening (nozzle) installed at the bottom of the container. A unit of g/10 min is used. For the test machine, an extrusion type plast meter specified by JIS K6769 is used. Measurements are taken using the measurement method specified by JIS K7210.

It is desirable that (A) ethylene-based copolymer contains (A1)-(A4) whose melt flow rate is 10-40 g/10 min. It is more desirable that it contains (A1) and particularly desirable that it contains a copolymer of ethylene and octene. As (A) ethylene-based copolymer with the melt flow rate of 10-40 g/10 min, Dow Chemical's Engage 8137 (product name) and Engage 8400 (product name) can be illustrated as examples both of which are ethylene-octene copolymers. The hot melt adhesive of the present adhesive maintains applicability at a low temperature and is excellent in heat resistance in the case that it contains (A) ethylene-based copolymer with the melt flow rate of 10-40 g/10 min.

(A) ethylene-based copolymer can be a combination of the aforementioned (A) ethylene-based copolymer with the melt flow rate of 10-40 g/10 min and a (A) ethylene-based copolymer with the melt flow rate of 400-600 g/10 min.

It is desirable that the (A) ethylene-based copolymer with the melt flow rate of 400-600 g/10 min is (A1)-(A4) and it is more desirable to be (A1) and (A4). As (A1) with the melt flow rate of 400-600 g/10 min, Dow Chemical's Affinity GA 1900 (product name), Affinity GA 1950 (product name), which are copolymers of ethylene and octene, and as (A4) with the melt flow rate of 400-600 g/10 min, Tosoh Corporation's Ultrasen 722 (product name) and Dupont's Evaflex 210 (product name), which are ethylene-vinyl acetate copolymers, and Sumitomo Chemical's Acryft CM5021 (product name) and Acryft CM5022 (product name), which are ethylene-methacrylate, etc. can be illustrated as examples.

"(B) Wax" of the present invention comprises (B1) a carboxylic acid or carboxylic acid anhydride-modified olefin copolymer wax. "Wax" in the present specifications refers to an organic matter whose weight-average molecular weight that is solid at a normal temperature and is liquidized when heated is below 10000, what is generally referred to as "wax", and is not particularly limited if it has a wax-like property, and as long as the hot melt adhesive related to the present invention can be obtained.

In the present invention, "(B1) a carboxylic acid or carboxylic acid anhydride-modified olefin copolymer wax" refers to olefin copolymer wax processed chemically or physically with a carboxylic acid or carboxylic acid anhydride, and it not particularly limited as long as the hot melt adhesive intended by the present invention can be obtained. As chemical and physical processing, oxidization, polymerization, composition, and synthesis can be illustrated as examples.

As such (B1) a wax, a wax that can be obtained through graft polymerization of a carboxylic acid or carboxylic acid anhydride and an olefin copolymer wax, and a wax that can be obtained through polymerization a carboxylic acid or carboxylic acid anhydride when an olefin copolymer wax is synthesized, can be illustrated as examples.

Therefore, it can be any olefin copolymer wax in which a carboxylic acid or carboxylic acid anhydride is introduced into "olefin copolymer wax" using various reactions, and is modified as a result.

A "carboxylic acid and/or carboxylic acid anhydride" to modify an olefin copolymer wax is not particularly limited as long as the hot melt adhesive of the present invention can be obtained.

As a carboxylic acid or carboxylic acid anhydride, maleic acid, maleic acid anhydride, fumaric acid, fumaric acid anhydride, itaconic acid, acrylic acid and methacrylic acid, etc can be illustrated as examples. These carboxylic acids or carboxylic acid anhydrides can be used on their own or by combining them. Maleic acid and maleic acid anhydride are desirable and maleic acid anhydride is particularly desirable.

"Olefin copolymer wax" modified by a carboxylic acid or carboxylic acid anhydride refers to a wax obtained through copolymerization of more than two kinds of olefin, and is not particularly limited as long as a (B 1) wax intended by the present invention can be obtained. Therefore, a wax in which one kind of olefin is copolymerized on its own is not included in the olefin copolymer wax.

As an olefin copolymer wax, polyethylene/polypropylene wax, polyethylinene/polybutylene wax, and polyethylene/polybuten wax can be illustrated as examples and polyethylene/polypropylene wax is desirable.

Therefore, maleic acid anhydride-modified polyethylene/polypropylene wax is particularly desirable as the (B1) wax in the present invention. Maleic acid anhydride-modified polyethylene/polypropylene wax can be obtained by copolymerizing maleic acid anhydride, ethylene and propylene.

"(B) Wax" can comprise a base wax other than the (B1) wax and the following can be illustrated as examples of such a base wax:
Synthesized wax such as Fischer-Tropsch wax and polyolefin wax (for example,
polyethylene wax, polypropylene wax, polyethylene/ polypropylene wax);
Oil wax such as paraffin wax and microcrystalline wax;
Natural wax such as caster wax.

The aforementioned wax can be a modified one. As a modifying substance, various carbonic acid derivatives are also permissive as long as a polar group can be introduced. The following can be illustrated as examples as such "carbonic acid derivatives;"
Carbonic acid ester such as ethyl acetate and vinyl acetate;
Acid halide such as bromide benzoyl;
Amide such as benzamide, N-methylacetamide, amd N, N-dimethylacetamide;
Imide such as succinimide;
Acyl azide such as acetyl azide;
Hydrazide such as propanoylhydrazide;
Lactone such as γ-butyrolactone
Lactam such as δ-caprolactam;
Modified base wax does not contain (B1) a carboxylic acid or carboxylic acid anhydride-modified olefin copolymer wax.

In the present invention, it is desirable that (B) wax comprises (B2) Fischer-Tropsch wax described as a base wax, in addition to (B1). "(B2) Fischer-Tropsch wax" refers to what is generally referred to as Fischer-Tropsch wax synthesized by the Fischer-Tropsch method. Fischer-Tropsch wax is what is sampled from a wax, which has a component molecule with a relatively wide carbon number distribution so that its component molecule has a narrow carbon number distribution. As a representative Fischer-Tropsch wax, Sasol Wax's Sasol H1 (product name) and Sasol Wax's Sasol C80 (product name) are commercially available.

In the present invention, it is desirable that the melting point of the (B1) wax is 100-130 °C and the melting point of the (B2) wax is 60-90 °C. The melting point can be measured by the method in compliance with ASTM D127.

It is desirable that the acid number of the (B) wax is 5-200 mgKOH/g and it is more desirable to be 20-160 mgKOH/g. The acid number can be measured by the method in compliance with ASTM D1308 or BWM 3.01A.

It is desirable that 30-70 parts by weight of (A) ethylene-based copolymer are contained per a total 100 parts by weight of (A) ethylene-based copolymer and (B) wax, 40-60 parts by weight are more desirable, and 50-60 parts by weight are particularly desirable.

It is desirable that 20-60 parts by weight of (A1) a copolymer of ethylene and olefin are contained per a total 100 parts by weight of (A) ethylene-based copolymer and (B) wax, 20-50 parts by weight are more desirable, and 30-50 parts by weight are particularly desirable.

It is desirable that 30-70 parts by weight of (B) wax are contained per a total 100 parts by weight of (A) ethylene-based copolymer and (B) wax, 40-60 parts by weight are more desirable, and 50-60 parts by weight are particularly desirable.

It is desirable that 1.0-10.0 parts by weight of (B1) a carboxylic acid or carboxylic acid anhydride-modified olefin copolymer wax are contained per a total 100 parts by weight of (A) ethylene-based copolymer and (B) wax, 2.0-8.0 parts by weight are more desirable, and 3.0-7.0 parts by weight are particularly desirable.

The hot melt adhesive related to the present invention may comprise various additives depending on needs. As such various additives, tackifier resin, plasticizer, ultraviolet absorber, antioxidant, stabilizer, and microparticulate filler can be illustrated as examples.

The "tackifier resin" is those which are normally used for hot melt adhesives and is not particularly limited as long as the hot melt adhesive intended by the present invention can be obtained.

The following can be illustrated as examples of such tackifier resin; natural rosin, degenerated rosin, hydrogenated rosin, glycerol ester of natural rosin, glycerol ester of degenerated rosin, pentaerythritol ester of natural rosin, pentaerythritol ester of degenerated rosin, pentaerythritol ester of hydrogenated rosin, copolymer of natural terpene, 3D polymer of natural terpene, deuterated derivative of copolymer of hydrogenated terpene, polyterpene resin, deuterated derivative of phenol system modified terpene resin, fatty series oil hydrocarbon resin, deuterated derivative of fatty series oil hydrocarbon resin, aromatic series oil hydrocarbon resin, deuterated derivative of aromatic series oil hydrocarbon resin, cyclic fatty series oil hydrocarbon resin, and deuterated derivative of cyclic fatty series oil hydrocarbon resin. These tackifier resins can be used on their own or by combining them. Liquid tackifier resins can also be used as long as their color tone is solid - light yellow; it has no substantial odor, and has satisfactory heat stability. Judging these characteristics in a comprehensive manner, the aforementioned deuterated derivatives of resins, etc. are desirable as the tackifier resin.

Commercially available tackifier resins can be used. The following can be illustrated as examples of such commercially available products; Exxon Mobil Corporation's ECR5600 (product name), Maruzen Petrochemical's Marukakuriya H (product name), Yasuhara Chemical's Kuriaron K100 (product name), Arakawa Chemical Industries' Arukon M100 (product name), Idemitsu's Imarv S100 (product name) and Imarv Y135 (product name), Yasuhara Chemical's Kuriaron K4090 (product name) and Kuriaron K4100 (product name), Exxon Mobil Corporation's ECR231C (product name) and ECR179EX (product name), and Eastman Chemical's Rigaraito R7100 (product name). These commercially available tackifier resins can be used on their own or by combining them.

The "plasticizer" is combined for the purpose of lowering the melt viscosity of the hot melt adhesive, adding flexibility and improving wetness against adherends and is not particularly limited as long as it is compatible with the whole of the ethylene-based copolymer and a hot melt adhesive intended by the present invention can be obtained. As examples of a plasticizer, paraffinic oil, naphthene series oil and aromatic series oil can be illustrated. Solid-colored and odor-free paraffinic oil is particularly desirable.

Commercially available plasticizers can be used. As examples, Kukdong Oil & Chem's White Oil Broom 350 (product name), Idemitsu's Diana Furesia S32 (product name), Diana Process Oil PW-90 (product name) and DN oil KP-68 (product name), BP Chemicals' Enerper M1930 (product name), Crompton's Kaydol (product name), and ESSO's Primo 1352 (product name) can be illustrated. These plasticizers can be used on their own or by combining them.

The "stabilizer" is combined in order to improve stability of the hot melt adhesive by preventing lowering of the molecular weight due to heat of the hot melt adhesive, gelatinization, coloring and odor, and is not particularly limited as long as a hot melt adhesive intended by the presentation can be obtained. As the stabilizer, antioxidants and ultraviolet absorbers can be illustrated as examples.

The "ultraviolet absorber" is used to improve light resistance of the hot melt adhesive. The "antioxidants" are used to prevent oxidation degradation of the hot melt adhesive. Ultraviolet absorbers and antioxidants are used generally for hot melt adhesives and are not particularly limited as long as the after-mentioned paper products intended can be obtained.

As antioxidants, phenol system antioxidants, sulfur system antioxidants, and phosphorous system antioxidants can be illustrated as examples. As ultraviolet absorbers, benzotriazole system ultraviolet absorbers and benzophenone system ultraviolet absorbers can be illustrated as examples. Moreover, lactone system stabilizer can also be added. These can be used on their own or by combining them.

Commercially available stabilizers can be used. For example, Sumitomo Chemical's Sumilizer GM (product name), Sumilizer TPD (product name) and Sumilizer TPS (product name), Chiba Specialty Chemicals' Irganox 1010 (product name), Irganox HP2225FF (product name), Irgafos 168 (product name), and Irganox 1520 (product name), and Johoku Chemical's JF77 (product name) can be illustrated. These stabilizers can be used on their own or by combining them.

Moreover, the hot melt adhesive of the present invention can comprise of a microparticle filler. Microparticle fillers can be any that are generally used and are not particularly limited as long as the hot melt adhesive intended by the present invention can be obtained. "Microparticle fillers" can be illustrated for example as mica, calcium carbonate, china clay, talc, oxidized titanium, diatom earth, urea system resin, styrene beads, burning clay, and starch, etc. It is desirable that the figuration of these is spherical shaped and their size (diameter in the case of a spherical shape) is not particularly limited.

It is desirable that the melt viscosity at 130 °C of the hot melt adhesive of the present invention is 500-1100 mPa/s. In the case that the melt viscosity at 130 °C is below 500 mPa/s, the adhesive power can be compromised and in the case that the melt viscosity at 130 °C exceeds 1100 mPa/s, application at 130 °C can become difficult. The melt viscosity at 130 °C in the present specifications refers to a value measured using No. 27 rotor, Brookfield viscometer, and thermosel.

The hot melt adhesive related to the present invention can be manufactured by using commonly known manufacturing methods for hot melt adhesives and by combining (A) ethylene-based copolymer and (B) wax as well as various additives depending on the necessity. For example, it can be manufactured by combining a certain amount of the aforementioned components, heating and melting it. The order of adding each component and the method of heating, etc. are not particularly limited as long as the intended hot melt adhesive can be obtained.

The method of applying the hot melt adhesive is not particularly limited as long as intended paper products can be obtained. Such methods of application can be roughly classified, for example, as a contact application and non-contact application. The "contact application" refers to a method of application whereby a squirting machine is contacted with parts or films when the hot melt adhesive is applied while the "non-contact application" refers to a method of application whereby a squirting machine is not contacted with parts or films when the hot melt adhesive is applied. As examples of the contact application method, a slot coater application and roll coater application, etc. can be illustrated. As examples of the non-contact application method, spiral application wherein the application in a spiral manner is possible, omega application and control seam application wherein the application in a wavelike fashion is possible, a slot spray application and curtain spray application wherein the application in a planar fashion is possible, a dot application wherein the application in a dot fashion is possible, and bead application, etc. wherein the application in a linear fashion is possible, can be illustrated.

By means of the aforementioned application methods, the hot melt adhesive of the present invention can be applied to various base materials at a low temperature of approximately 130 °C.

The hot melt adhesive related to the present invention is widely used, for example, for electronic parts, woodwork, construction material, sanitary material, and paper products. It is especially useful as a hot melt adhesive for paper products as it can be suitably used to manufacture paper products.

Paper products related to the present invention refer to paper products manufactured using the aforementioned hot melt adhesive. While the types of paper products are not particularly limited as long as they are manufactured using the aforementioned adhesive, they can be illustrated, for example, as bookbinding, calendars, cardboard boxes and cartons, etc.

Primary embodiments of the present inventions are described below:
1. A hot melt adhesive comprising (A) an ethylene-based copolymer and (B) a wax, wherein
   (B) the wax comprises (B1) a carboxylic acid or carboxylic acid anhydride-modified olefin copolymer wax, wherein (A) comprises an ethylene-olefin copolymer which is a copolymer of ethylene and octene.
2. The hot melt adhesive according to 1 above, wherein (B1) the carboxylic acid or carboxylic acid anhydride-modified olefin copolymer wax is a maleic acid anhydryde-modified olefin copolymer wax.
3. The hot melt adhesive according to 2 above, wherein the carboxylic acid or carboxylic acid anhydride-modified olefin copolymer wax is a wax obtained through copolymerization of maleic acid anhydride, ethylene and propylene.
4. The hot melt adhesive according to any one of claims 1-3, wherein (B) the wax comprises further (B2) Fischer-Tropsch wax.
5. The hot melt adhesive according to any one of claims 1-4, wherein the hot melt adhesive shows a melt viscosity at a temperature of 130 °C is 500 - 1100 mPa·s.
6. A paper product produced by using the hot melt adhesive according to any one of 1-5 above.

The present invention is explained below using embodiments and comparisons for the purpose of explaining the present invention in more detail and more specifically. These embodiments are to explain the present invention and do not limit the present invention in any way.

Below is a raw material, composition, and methods of evaluation of hot melt adhesives.

### (A) Ethylene-based copolymer

### (A1) Ethylene-olefin copolymer

(a1-1) Ethylene-octene copolymer (weight-average molecular weight: 38000, content of 1-octene: 35-37 weight %, melt flow rate: 500 g/10 min, Dow Chemical's Affinity GA 1900 (product name))
(a1-2) Ethylene-propylene-1-buten copolymer (weight-average molecular weight: 34000, melt flow rate: 450 g/10 min, melting point: 124 °C, melt viscosity at a temperature of 190 °C: 2700 mPa·s, Evonik Industries' VESTLAST 703 (product name)).
(a1-3) Ethylene-octene copolymer (weight-average molecular weight: 64000, content of 1-octene: 13 weight %, melt flow rate: 13 g/10 min, Dow Chemical's ENGAGE 8137 (product name))

### (A4) Ethylene-carbonic acid ester copolymer

(a4-1) Ethylene-vinyl acetate copolymer (weight-average molecular weight: 38000, vinyl acetate content: 28 weight %, melt flow rate: 400 g/10 min, Tosoh Corporation's Ultrasen 722 (product name))
(a4-2) Ethylene-methacryl acid methyl copolymer (weight-average molecular weight: 38000, methacryl acid methyl content: 28 weight %, melt flow rate: 400 g/10 min, Sumitomo Chemical's Acryft CM5021 (product name))

### (B) Wax

### (B1) Carboxylic acid or carboxylic acid anhydride-modified olefin copolymer wax

(b1) Maleic acid anhydride-modified ethylene-propylene copolymer wax (weight-average molecular weight: 2700, melting point: 110 °C, penetration: 3 and under, melt flow rate at 140 °C: 300 mPa/s, melting point: 107 °C, acid number: 30 mgKOH/gn, Mitsui Chemical's Hi-Wax 2203A (product name))

### (B2) Fischer-Tropsch wax

(b2) Fischer-Tropsch wax (weight-average molecular weight: 630, melting point: 80 °C, penetration: 7 and under, Sasol Wax's Sasol C80 (product name))

### (B3) Other waxes

(b3-1) Maleic acid anhydride-modified polyethylene wax (weight-average molecular weight: 7100, melting point: 106 °C, melt viscosity at 140 °C: 4200 mPa/s, acid number: 33 mgKOH/g, Honeywell's A-C575P (product name))
(b3-2) Maleic acid anhydride-modified polypropylene wax (weight-average molecular weight: 6100, flexibility point: 140 °C, melt viscosity at 170 °C: 40 mPa/s, acid number: 40 mgKOH/g, Clariant's Licocene MA6252 (product name))
(b3-3) Crystalline polyethylene wax (weight-average molecular weight: 500, melting point: 88 °C, penetration: 6.5, melt viscosity at 149 °C: 5 mPa/s, Baker-Petrolite's Polywax 500 (product name))
(b3-4) Crystalline polyethylene wax (weight-average molecular weight: 2200, melting point: 136 °C, penetration: 1 and under, melt viscosity at 140 °C: 650 mPa/s, melting point: 126 °C, Mitsui Chemical's Hi-Wax 400P (product name))
(b3-5) Crystalline polypropylene wax (weight-average molecular weight: 4000, melting point: 150 °C, penetration: 1 and under, melt viscosity at 180 °C: 150 mPa/s, melting point: 140 °C, Mitsui Chemical's Hi-Wax NP105 (product name))
(b3-6) Ethylene-vinyl acetate copolymer wax (vinyl acetate content 13 weight %, weight-average molecular weight: 14400, melting point: 92 °C, melt viscosity at 140 °C: 595 mPa/s, Honeywell's A-C400 (product name))

### (C) Tackifier resin

(c1) Deuterated derivative of aromatic series oil hydrocarbon resin (flexibility point: 135 °C, Idemitsu's Imarv S100 (product name))
(c2) Deuterated derivative of aromatic series oil hydrocarbon resin (flexibility point: 100 °C, Exxon Mobil Corporation's ECR-179EX (product name))

These components were melted and mixed at the ratio (parts by weight) shown in Tables 1 and 2. Each component was melted and mixed over an hour at approximately 145 °C using a universal mixer to produce hot melt adhesives of embodiments 1-5 and comparisons 1-5.Their melt viscosity, applicability at a low temperature, open time, heat resistance, and adhesiveness were evaluated using the following methods.

### <Melt viscosity>

The melt viscosity at 120 °C, 130 °C, and 140 °C, was measured using a Brookfield viscometer (No. 27 rotor) and thermosel.

### <Applicability at a low temperature>

The hot melt adhesive melted by heating at 130 °C was applied to K-liner cardboards to attach them together at an amount of 2 g/m, set time 10 seconds, press pressure 1 kg/25 cm2 and the expanse of the hot melt adhesive when forcibly detached was measured.
- ⊚:: The expanse of the hot melt adhesive was greater than 10 mm
- ○:: The expanse of the hot melt adhesive was greater than 8 mm and 10 mm or under
- ×:: The expanse of the hot melt adhesive was below 8mm

### <Open time>

The hot melt adhesive melted by heating at 130 °C was applied to K-liner cardboards to attach them together at an amount of 2 g/m, set time 10 seconds, press pressure 1 kg/25 cm2 and afterwards, the amount of time allowed for adhesion work was measured.
- ⊚:: The open time was longer than 12 seconds
- ○:: The open time was longer than 10 seconds and 12 seconds or under
- ×:: The open time was below 10 seconds

### <Heat resistance>

The hot melt adhesive melted by heating at 130 °C was applied to K-liner cardboards to attach them together at an amount of 2 g/m, set time 10 seconds, press pressure 1 kg/25 cm2.

300 g/g/25 cm2 of load was applied to the prepared samples in a 60 °C atmosphere, and in the stress direction to measure the time until the attached sample was detached.
- ⊚:: Heat resistance was longer than 6 hours
- ○:: Heat resistance was longer than 3 hours and 6 hours or under
- ×:: Heat resistance was longer than 1 hour and below 3 hours
- xx:: Heat resistance was below 1 hour

### <Adhesiveness>

The hot melt adhesive melted by heating at 130 °C was applied to K-liner cardboards to attach them together at an amount of 2 g/m, set time 10 seconds, press pressure 1 kg/25 cm2.

Prepared samples were cured for 24 hours in a constant temperature reservoir set at 60 °C, 23 °C, and -10 °C. Afterwards, a forced detachment test was carried out by detaching them by hand under that atmosphere. The ratio of destruction of the K-liner cardboards across the total area of adhesion was taken as the ratio of destruction of material, which was evaluated.
- ⊚:: The ratio of destruction of material was higher than 80%.
- ○:: The ratio of destruction of material was higher than 60% and 80% or under.

**[Table 1]**

| | | | | Embodiment | | |
|---|---|---|---|---|---|---|
| | | 1 | 2 | 3 | 4 | 5 |
| (A) | | | | | | |
| (A1) | (a1 - 1) | 38 | | | | 38 |
| | (a1 - 2) | | | | 38 | |
| | (a1 - 3) | 5 | 5 | 5 | 5 | 5 |
| (A4) | (a4 - 1) | | 38 | | | |
| | (a4 - 2) | | | 38 | | |
| (B) | | | | | | |
| (B1) | (b1) | 5 | 5 | 5 | 5 | 5 |
| (B2) | (b2) | 52 | 52 | 52 | 52 | |
| (B3) | (b3 - 1) | | | | | |
| | (b3 - 2) | | | | | |
| | (b3 - 3) | | | | | 52 |
| | (b3 - 4) | | | | | |
| | (b3 - 5) | | | | | |
| | (b3 - 6) | | | | | |
| Total of (A) and (B) | (Parts by weight)) | 100 | 100 | 100 | 100 | 100 |
| | | | | | | |
| (C) | (c1) | 43 | 43 | 43 | 43 | 43 |
| | (c2) | 29 | 29 | 29 | 29 | 29 |
| Total of (A)-(C) | (Parts by weight) | 172 | 172 | 172 | 172 | 172 |
| Melt viscosity | (mPa·s) | | | | | |
| 120 °C | | 1270 | 1260 | 1180 | 720 | 1260 |
| 130 °C | | 900 | 880 | 860 | 650 | 890 |
| 140 °C | | 650 | 650 | 620 | 450 | 660 |
| Applicability at a low temperature | | ⊚ | ⊚ | ⊚ | ○ | ⊚ |
| Open time | | ⊚ | ⊚ | ⊚ | ⊚ | ⊚ |
| Heat resistance | | ⊚ | ○ | ○ | ○ | ○ |
| Adhesiveness | | | | | | |
| 60 °C | | ⊚ | ⊚ | ⊚ | ○ | ○ |
| 23 °C | | ⊚ | ⊚ | ⊚ | ⊚ | ⊚ |
| -10 °C | | ⊚ | ⊚ | ⊚ | ⊚ | ○ |

**[Table 2]**

| | | | | Comparisons | | |
|---|---|---|---|---|---|---|
| | | 1 | 2 | 3 | 4 | 5 |
| (A) | | | | | | |
| (A1) | (a1 - 1) | 38 | 38 | 38 | 38 | 38 |
| | (a1 - 2) | | | | | |
| | (a1 - 3) | 5 | 5 | 5 | 5 | 5 |
| (A4) | (a4 - 1) | | | | | |
| | (a4 - 2) | | | | | |
| (B) | | | | | | |
| (B1) | (b1) | | | | | |
| (B2) | (b2) | 52 | 52 | 52 | 52 | 52 |
| (B3) | (b3 - 1) | 5 | | | | |
| | (b3 - 2) | | 5 | | | |
| | (b3 - 3) | | | | | |
| | (b3 - 4) | | | 5 | | |
| | (b3 - 5) | | | | 5 | |
| | (b3 - 6) | | | | | 5 |
| Total of (A) and (B) | (Parts by weight)) | 100 | 100 | 100 | 100 | 100 |
| | | | | | | |
| (C) | (c1) | 43 | 43 | 43 | 43 | 43 |
| | (c2) | 29 | 29 | 29 | 29 | 29 |
| Total of (A)-(C) | (Parts by weight)) | 172 | 172 | 172 | 172 | 172 |
| Melt viscosity | (mPa·s) | | | | | |
| 120 °C | | 1630 | 1840 | 2010 | 2325 | 1950 |
| 130 °C | | 1160 | 1330 | 1430 | 1630 | 1370 |
| 140 °C | | 830 | 990 | 1030 | 1320 | 990 |
| Applicability at a low temperature | | ○ | × | × | × | × |
| Open time | | ⊚ | ○ | ○ | × | ○ |
| Heat resistance | | × | × | × | × | ×× |
| Adhesiveness | | | | | | |
| 60 °C | | | ○ | ○ | ○ | ○ |
| 23 °C | | ○ ⊚ | ⊚ | ⊚ | ⊚ | ⊚ |
| -10 °C | | ⊚ | ⊚ | ⊚ | ⊚ | ⊚ |

As shown in Table 1, the hot melt adhesives of embodiments 1-5 are excellent in the balance of heat resistance, applicability at a low temperature, and open time because they comprise (B1) maleic acid anhydride-modified olefin copolymer wax. Generally, improving heat resistance of a hot melt adhesive leads to difficulty in application at a low temperature however, the hot melt adhesives of embodiments 1-5 are excellent in applicability at a low temperature (130 °C) while heat resistance is maintained. Because the hot melt adhesives of embodiments 1-5 show a relatively long open time, they are useful in the paper processing and wood processing fields. In particular, the hot melt adhesive of embodiment 1 is ⊚ as it is excellent in all three properties of low-temperature applicability, heat resistance and open time.

In contrast, the hot melt adhesives of comparisons 1-5 are inferior in heat resistance and may be inferior in low-temperature applicability as shown in Table 2 as they do not comprise (B1). Neither (b3-1) maleic acid anhydride-modified polyethylene wax nor (b3-2) maleic acid anhydride-modified polypropylene wax can achieve the objectives of the present invention.

Considering the above, combining (B1) in (A) ethylene-based copolymer can lead to obtaining a hot melt adhesive, which is excellent in low-temperature applicability, heat resistance and open time.
The present invention provides a hot melt adhesive. The hot melt adhesive related to the present invention is particularly suited for the paper processing field such as bookbinding, calendars, cardboards, etc.

## Claims

1. A hot melt adhesive comprising (A) an ethylene-based copolymer and (B) a wax, wherein (B) the wax comprises (B1) a carboxylic acid or carboxylic acid anhydride-modified olefin copolymer wax, wherein (A) comprises an ethylene-olefin copolymer which is a copolymer of ethylene and octene.

2. The hot melt adhesive according to claim 1, wherein (B1) the carboxylic acid or carboxylic acid anhydride-modified olefin copolymer wax is a maleic anhydride-modified olefin copolymer wax.

3. The hot melt adhesive according to claim 1 or 2, wherein (B) the wax comprises further (B2) Fischer-Tropsch wax.

4. The hot melt adhesive according to any one of claims 1 to 3, wherein the hot melt adhesive shows a melt viscosity of 500 - 1100 mPa*s at a temperature of 130 °C.

5. A paper product produced by using the hot melt adhesive according to any one of claims 1 to 4.

6. A hot melt adhesive according to claim 1 comprising :
a copolymer of ethylene and octene, wherein the copolymer has a melt flow rate of 10- 500 g/10 min at 190°C;
a mixture of wax,
wherein at least one wax is a carboxylic acid or carboxylic acid anhydride-modified olefin copolymer wax that has a melting point of 100-130°C; and a second wax is a Fischer-Tropsch wax that has a melting point of 60-90°C and
wherein the mixture of the wax has an acid number of 20-160 mgKOH/g in accordance with ASTM D1308.

## Patentansprüche

1. Schmelzklebstoff, umfassend (A) ein Copolymer auf Ethylenbasis und (B) ein Wachs, wobei (B) das Wachs (B1) ein carbonsäure- oder ein carbonsäureanhydridmodifiziertes Olefin-Copolymerwachs umfasst, wobei (A) ein Ethylen-Olefin-Copolymer umfasst, bei dem es sich um ein Copolymer aus Ethylen und Octen handelt.

2. Schmelzklebstoff nach Anspruch 1, wobei (B1) das carbonsäure- oder carbonsäureanhydridmodifizierte Olefin-Copolymerwachs ein maleinsäureanhydridmodifiziertes Olefin-Copolymerwachs ist.

3. Schmelzklebstoff nach Anspruch 1 oder 2, wobei (B) das Wachs ferner (B2) Fischer-Tropsch-Wachs umfasst.

4. Schmelzklebstoff nach einem der Ansprüche 1 bis 3, wobei der Schmelzklebstoff eine Schmelzviskosität von 500-1100 mPa*s bei einer Temperatur von 130 °C aufweist.

5. Papierprodukt, hergestellt unter Verwendung des Schmelzklebstoffs nach einem der Ansprüche 1 bis 4.

6. Schmelzklebstoff nach Anspruch 1, umfassend:
ein Copolymer aus Ethylen und Octen, wobei das Copolymer eine Schmelzflussrate von 10-500 g/10 min bei 190 °C aufweist;
eine Mischung aus Wachs,
wobei mindestens ein Wachs ein carbonsäure- oder carbonsäureanhydridmodifiziertes Olefin-Copolymerwachs ist, das einen Schmelzpunkt von 100-130 °C aufweist; und ein zweites Wachs ein Fischer-Tropsch-Wachs ist, das einen Schmelzpunkt von 60-90 °C aufweist und
wobei die Mischung des Wachses eine Säurezahl von 20-160 mgKOH/g gemäß ASTM D1308 aufweist.

## Revendications

1. Adhésif thermofusible comprenant (A) un copolymère à base d'éthylène et (B) une cire, où la cire (B) contient (B1) une cire copolymère oléfine modifiée par un acide carboxylique ou un anhydride d'acide carboxylique, (A) comprenant un copolymère éthylène-oléfine qui est un copolymère d'éthylène et d'octène.

2. Adhésif thermofusible selon la revendication 1, où la cire copolymère oléfine modifiée par un acide carboxylique ou un anhydride d'acide carboxylique (B1) est une cire copolymère oléfine modifiée par l'anhydride maléique.

3. Adhésif thermofusible selon la revendication 1 ou 2, où la cire (B) contient en outre (B2) une cire Fischer-Tropsch.

4. Adhésif thermofusible selon l'une quelconque des revendications 1 à 3, l'adhésif thermofusible présentant une viscosité à l'état fondu de 500 à 1 100 mPa.s à une température de 130°C.

5. Produit de papier produit en utilisant un adhésif thermofusible selon l'une quelconque des revendications 1 à 4.

6. Adhésif thermofusible selon la revendication 1, contenant :
un copolymère d'éthylène et d'octène, le copolymère ayant un débit d'écoulement en phase fondue de 10 à 500 g/10 min à 190°C ;
un mélange de cires ;
où au moins une cire est une cire copolymère oléfine modifiée par un acide carboxylique ou un anhydride d'acide carboxylique ayant un point de fusion de 100 à 130°C ; et une seconde cire Fischer-Tropsch ayant un point de fusion de 60 à 90°C ; et
où le mélange de cires a un indice d'acide de 20 à 160 mg_{KOH}/g selon la norme ASTM D1308.
